## Europäisches Patentamt
## European Patent Office
## Office européen des brevets

(19)

(11) Veröffentlichungsnummer: **0 287 580**
**B1**

(12) **EUROPÄISCHE PATENTSCHRIFT**

(45) Veröffentlichungstag der Patentschrift: 06.02.91

(21) Anmeldenummer: 87905719.8

(22) Anmeldetag: 11.09.87

(86) Internationale Anmeldenummer:
**PCT/DE87/00410**

(87) Internationale Veröffentlichungsnummer:
**WO 88/02814 21.04.88 Gazette 88/09**

(51) Int. Cl.⁵: **F 02 M 45/04**, F 02 M 63/00,
F 02 M 45/08

(54) KRAFTSTOFFEINSPRITZVORRICHTUNG FÜR BRENNKRAFTMASCHINEN, INSBESONDERE FÜR DIESELMOTOREN.

(30) Priorität: 14.10.86 DE 3634962

(43) Veröffentlichungstag der Anmeldung:
26.10.88 Patentblatt 88/43

(45) Bekanntmachung des Hinweises auf die
Patenterteilung:
06.02.91 Patentblatt 91/06

(84) Benannte Vertragsstaaten:
DE FR GB IT

(56) Entgegenhaltungen:
EP-A-0 141 044        FR-A- 746 655
EP-A-0 147 026        FR-A-2 303 171
DE-A-2 806 788        GB-A- 549 419
DE-A-3 046 072        GB-A-1 293 155
DE-A-3 330 772        US-A-4 033 301
FR-A- 224 736

Patent Abstracts of Japan, Vol.5, Nr. 101 (M-76)
(773), 30 June 1981 & JP, A, 5644454
(MITSUBISHI JUKOGYO K.K.) 23 April 1981 see
the whole abstract

(73) Patentinhaber: ROBERT BOSCH GMBH
Postfach 50
D-7000 Stuttgart 1 (DE)

(72) Erfinder: EBLEN, Ewald
Fridinger Strasse 53
D-7000 Stuttgart 75 (DE)
Erfinder: HOFMANN, Karl
Amselweg 22
D-7148 Remseck 1 (DE)
Erfinder: SCHMITT, Alfred
August-Lämmle-Weg 2
D-7257 Ditzingen 4 (DE)
Erfinder: STRAUBEL, Max
Ontariostrasse 30B
D-7000 Stuttgart 61 (DE)
Erfinder: TRUONG-CANH, Hung
Kleiner Ostring 103
D-7000 Stuttgart 50 (DE)

(56) Entgegenhaltungen:
Patent Abstracts of Japan, Vol.7, Nr. 9 (M-185)
(1154), 14 January 1983 & JP, A, 57168027
(NIPPON DENSO K.K.) 16 October 1982 see the
whole abstract

Courier Press, Leamington Spa, England.

**Beschreibung**

Stand der Technik

Die Erfindung geht aus von einer Kraftstoffeinspritzvorrichtung für Brennkraftmaschinen, insbesondere für Dieselmotoren, der im Oberbegriff des Anspruchs 1 definierten Gattung.

Bei Dieselmotoren mit Direkteinspritzung ergeben sich durch die schlagartige Verbrennung erhebliche Geräuschprobleme. Eine merkliche Geräuschreduzierung läßt sich indes durch die Aufteilung der Kraftstoffeinspritzmenge in eine kleinere Voreinspritzmenge und eine von der Drehzahl und der Last des Dieselmotors abhängige Haupteinspritzmenge erzielen. Zur Aufteilung der Einspritzmenge hat man daher zusätzlich zu der Kraftstoffeinspritzpumpe eine gesonderte Voreinspritzeinheit vorgesehen, welche eine Voreinspritzmenge der Einspritzdüse zuführt.

Bei einer bekannten Kraftstoffeinspritzvorrichtung für Verbrennungskraftmaschinen der eingangs genannten Art (DE—OS—27 21 628) weist die Voreinspritzeinheit eine Voreinspritzpumpe auf, die mit einem piezoelektrischen Antrieb versehen ist. Der Piezoantrieb wird von einem Steuerkreis erregt, der seinerseits von einem rotierenden Teil der Brennkraftmaschine, z.B. von der Kurbelwelle, ein drehwinkelabhängiges Signal erhält. Die Kraftstoffeinspritzpumpe konventioneller Bauart wird in Synchronisation mit der Brennkraftmaschine angetrieben. Die Voreinspritzpumpe weist einen Kolben auf, der in einem mit der Kraftstoffleitung zwischen Kraftstoffeinspritzpumpe und Einspritzdüse in Verbindung stehenden Zylinder axial verschiebbar ist. Wird der Piezoantrieb erregt, so verschiebt er ggf. über eine hydraulische Übersetzung den Kolben auf kleinstes Zylindervolumen. Dadurch wird Kraftstoff aus dem Zylinder verdrängt und bewirkt ein Öffnen der Einspritzdüse, durch welche die Voreinspritzmenge austritt. Am Ende des Kolbenhubs bleibt der Piezoantrieb erregt, wodurch nunmehr der von der Kraftstoffeinspritzpumpe geförderte Kraftstoff die Einspritzdüse geöffnet hält oder erneut öffnet, und somit die Haupteinspritzmenge durch die geöffnete Einspritzdüse austreten kann. Gegen Ende des Förderhubs der Kraftstoffeinspritzpumpe wird der Piezoantrieb entregt, wodurch sich der Kolben in die Stellung mit größtem Zylindervolumen zurückbewegt. Dadurch wird das Volumen der Kraftstoffleitung schlagartig vergrößert. Damit fällt der Druck in der Kraftstoffleitung und in der Einspritzdüse schlagartig ab, und die Einspritzdüse schließt.

Bei dieser Ausbildung der Voreinspritzeinheit ist die Voreinspritzmenge durch den Hub des Kolbens bestimmt und konstruktiv unabänderlich festgelegt. Lediglich der Zeitpunkt der Voreinspritzung läßt sich steuern.

Damit ist eine optimale Auslegung der Voreinspritzung hinsichtlich der maximalen Geräuschreduzierung durch fehlende Justiermöglichkeiten nicht möglich. Außerdem läßt sich die Voreinspritzung zeitlich auch nicht ohne Beeinflussung der Haupteinspritzung verändern, da diese immer unmittelbar nach Beendigung der Voreinspritzung einsetzt.

Vorteile der Erfindung

Die erfindungsgemäße Kraftstoffeinspritzvorrichtung mit den kennzeichnenden Merkmalen des Anspruchs 1 hat den Vorteil, daß die Hydraulikkreise für Haupt- und Voreinspritzung vollkommen voneinander getrennt sind und damit die Voreinspritzung die Haupteinspritzung in keiner Weise beeinflußt. Durch die Zeitsteuerung des Magnetventils läßt sich die Voreinspritzmenge in weiten Grenzen einstellen. Beides zusammen macht eine optimale Auslegung der Voreinspritzung bezüglich Geräuschreduktion ohne Nachteile in Verbrauch und Abgas möglich. Die Zuordnung der Voreinspritzung zur Haupteinspritzung ist frei wählbar, so daß die Kennwerte, wie Spritzbeginn und Einspritzmenge, in Kennfeldern abgelegt werden können. Durch die Trennung der Voreinspritzung von der nach wie vor konventionellen Haupteinspritzung ist das benötigte Volumen des Hochdruckspeichers entsprechend klein, wodurch auch der Kapazitätsbedarf der Pumpe zur Speicherdruckversorgung gering ist.

Durch die in den weiteren Ansprüchen aufgeführten Maßnahmen sind vorteilhafte Weiterbildungen und Verbesserungen der im Anspruch 1 angegebenen Kraftstoffeinspritzvorrichtung möglich.

Eine vorteilhafte Ausführungsform der Erfindung ergibt sich dabei aus Anspruch 2. Die getrennten Düsenquerschnitte, die z.B. durch eine Doppelnadeldüse gemäß Anspruch 3 realisiert werden können, erleichtern die optimale Auslegung der Voreinspritzung ohne Inkaufnehmen von Nachteilen bei der Haupteinspritzung.

Eine vorteilhafte Ausführungsform der Erfindung ergibt sich aus Anspruch 4, 5 oder 6. Bei diesen Ausführungsformen können konventionelle Einspritzdüsen verwendet werden. Bei den Ausführungsformen gemäß Anspruch 4 und 5 ergeben sich die zusätzlichen Vorteile, daß die Leitungslängen zwischen Hochdruckspeicher und Magnetventil unkritisch sind, daß die sich beim Schließen der Einspritzdüsen ausbildenden Druckwellen ein gutes Ausschwingverhalten zeigen und daß keine Kraftstoffabsteuerung zu der Kraftstoffrückführleitung hin durch das Magnetventil erfolgt.

Die Ausführungsformen der Erfindung gemäß Anspruch 8—11 zeigen weitere Möglichkeiten von Kraftstoffeinspritzvorrichtungen, die jedoch eine besondere Ausbildung der Voreinspritzdüsen erfordern. Bei diesen Einspritzdüsen wird durch Druck auf der Düsennadelrückseite die Einspritzdüse geschlossen gehalten. Durch Absteuerung des Schließdruckes können die Düsenquerschnitte geöffnet werden.

Zeichnung

Die Erfindung ist anhand von in der Zeichnung dargestellten Ausführungsbeispielen in der nachfolgenden Beschreibung näher erläutert. Es zeigen jeweils in schematischer Darstellung:

Fig. 1 ein Kraftstoffeinspritzvorrichtung für einen Dieselmotor,

Fig. 2 jeweils eine Vorspritzeinheit mit Voreinspritzdüse der bis 5 Kraftstoffeinspritzvorrichtung in Fig. 1 gemäß weiterer Ausführungsbeispiele.

Beschreibung der Ausführungsbeispiele

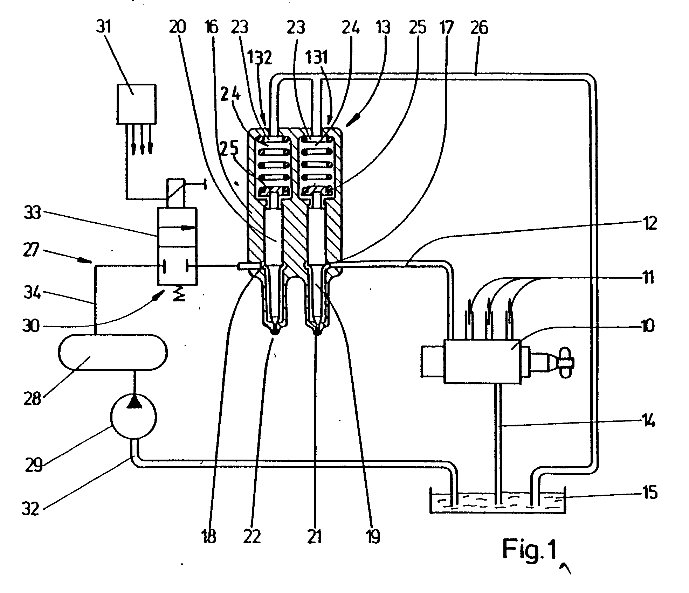

Die in Fig. 1 schematisch dargestellte Kraftstoffeinspritzvorrichtung für einen vierzylindrigen Dieselmotor als Beispiel einer Verbrennungskraftmaschine weist eine Einspritzpumpe 10 mit vier Druckleitungsanschlüssen 11 auf, die über Kraftstoffleitungen 12 mit jeweils einer einem Zylinder zugeordneten Einspritzdüse 13 verbunden sind. Der Übersichtlichkeit halber ist in Fig. 1 nur eine Einspritzdüse 13 für einen Zylinder des Dieselmotors dargestellt. Bei einem vierzylindrigen Dieselmotor sind vier Einspritzdüsen 13 vorhanden, die über jeweils eine Kraftstoffleitung 12 mit der Kraftstoffeinspritzpumpe 10 verbunden sind. Die eingangsseitig über eine Ansaugleitung 14 mit einem Kraftstoffbehälter 15 verbundene Kraftstoffeinspritzpumpe 10 wird in Synchronisation mit dem Dieselmotor angetrieben und kann als Reihen- oder Verteilereinspritzpumpe ausgebildet sein. Die in Haupteinspritzdüse 131 und Voreinspritzdüse 132 unterteilte Einspritzdüse 13 ist eine sog. Doppelnadeldüse, die einen Düsenhalter 16 mit zwei Einspritzkammern 17, 18 und zwei Düsennadeln 19, 20 aufweist. Jede Einspritzkammer 17, 18 weist eine Spritzöffnung 21 bzw. 22 auf, die von der zugeordneten Düsennadel 19 bzw. 20 geschlossen oder freigegeben wird. Der Querschnitt der Spritzöffnungen ist unterschiedlich ausgebildet, wobei der Voreinspritzdüse 132 der kleinere Querschnitt zugeordnet ist. Die in dem Düsenhalter 16 axial beweglichen Düsennadeln 19, 20 sind so ausgebildet, daß sie von dem Druck in den Einspritzkammern 17, 18 in Öffnungsrichtung beaufschlagt werden.

Auf der Rückseite der beiden Düsennadeln 19, 20 greift jeweils eine Schließkraft an, welche die Düsennadeln 19, 20 in Schließrichtung belastet. Die Schließkraft wird von Schließfedern 23 erzeugt, die in jeweils einem Federraum 24 des Düsenhalters 16 untergebracht sind und sich einerseits an dem Düsenhalter 16 und andererseits über jeweils einen Druckbolzen 25 auf der Rückseite der beiden Düsennadeln 19, 20 abstützen. Zwecks Rückführung von Kraftstoff-Leckmengen sind die Federräume 24 über eine Kraftstoffrückführleitung 26 mit dem Kraftstoffbehälter 15 verbunden. Die von der Kraftstoffeinspritzpumpe 10 kommende Kraftstoffleitung 12 mündet in der Einspritzkammer 17 der Haupteinspritzdüse 131, während die Einspritzkammer 18 der Voreinspritzdüse 132 mit einer Voreinspritzeinheit 27 verbunden ist.

Die Voreinspritzeinheit 27 besteht aus einem Hochdruckspeicher 28, der mittels einer Kraftstofförderpumpe 29 mit Kraftstoff auf Einspritzdruck gespannt wird, und aus vier zeitgesteuerten Magnetventilen 30, deren Magneterregung von einer Steuereinheit 31 gesteuert wird. Die Anzahl der vorhandenen Magnetventile 30 richtet sich nach der Anzahl der vorhandenen Einspritzdüsen 13. In Fig. 1 ist entsprechend der einen Einspritzdüse 13 nur ein Magnetventil 30 dargestellt. Hochdruckspeicher 28, Kraftstofförderpumpe 29 und Steuereinheit 31 sind unabhängig von der Anzahl der Einspritzdüsen 13 nur einmal vorhanden. Die Kraftstofförderpumpe 29 ist dabei über eine weitere Ansaugleitung 32 wiederum mit dem Kraftstoffbehälter 15 verbunden. Das Magnetventil 30 ist als 2/2-Wegeventil 33 mit Federrückstellung ausgebildet, wobei von seinen beiden gesteuerten Anschlüssen einer mit der Einspritzkammer 18 der Einspritzdüse 13 und der andere mit dem Hochdruckspeicher 28 vebrunden ist. Das 2/2-Wegeventil 33 ist in seinem stromlosen, d.h. unerregten, Ruhezustand geschlossen und unterbricht die Verbindungsleitung 34 zwischen Hochdruckspeicher 28 und Einspritzkammer 18 der Einspritzdüse 13. Zur Synchronisation der Ansteuerung des Magnetventils 30 mit dem Förderhub der Kraftstoffeinspritzpumpe 10 weist die Steuereinheit 31 weiter nicht dargestellte Sensoren auf, die die Triggerung des Magnetventils 30 auslösen. Ein solcher Sensor kann z.B. ein Kurbelwinkelsensor sein, der drehwinkelabhängige Triggersignale liefert. Als Sensor kann aber auch ein Düsennadelbewegungsfühler verwendet werden. Durch entsprechende zeitliche Verschiebung der Triggerung des Magnetventils 30 gegenüber diesen Sensorsignalen in der Steuereinheit 31 kann der Voreinspritzbeginn und die Voreinspritzmenge in weiten Grenzen eingestellt und variiert werden. Die mittels der Kraftstoffeinspritzpumpe 10 über die Einspritzkammer 17 und die Spritzöffnung 21 durchgeführte Haupteinspritzung ist konventionell und allgemein bekannt.

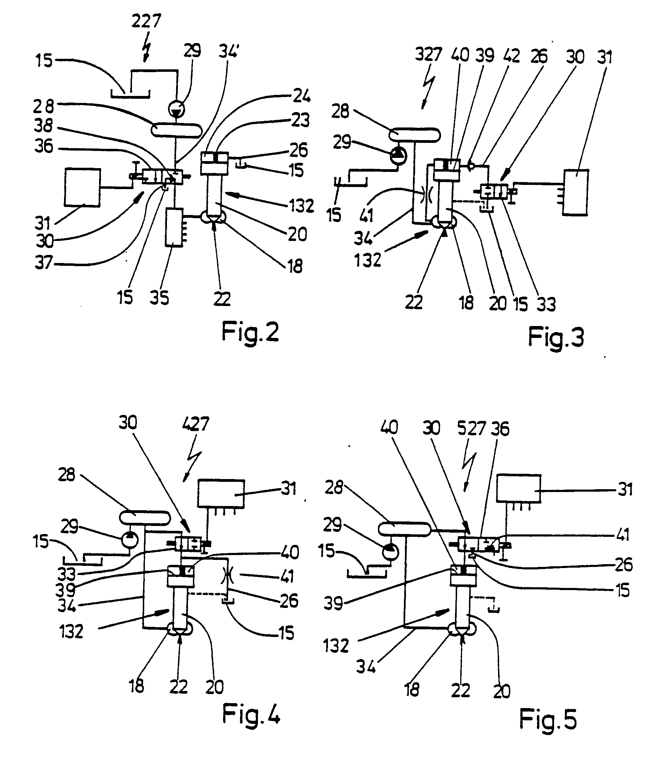

In Fig. 2 bis Fig. 5 ist jeweils eine Variante der Voreinspritzeinheit 27 in Fig. 1 dargestellt. Von der Einspritzdüse 13 ist dabei nur die Voreinspritzdüse 132 gezeigt. Jede der Vorspritzeinheiten 227—527 ist wiederum für einen vierzylindrigen Dieselmotor konzipiert und kann in Fig. 1 an die Stelle der Vorspritzeinheit 27 treten.

Die Voreinspritzeinheit 227 in Fig. 2 unterscheidet sich von der in Fig. 1 dadurch, daß für die vier Voreinspritzdüsen 132 ein zwangsgesteuertes mechanisches Verteilerelement 35 vorgesehen ist, das ausgangsseitig mit jeweils einer Einspritzkammer 18 der Einspritzdüsen 13 und eingangsseitig über das Magnetventil 30 mit dem Hochdruckspeicher 28 verbunden ist. Das Magnetventil 30 ist als 3/2-Wegeventil 36 ausgebildet, von dessen drei gesteuerten Anschlüssen einer mit dem Ausgang des Hochdruckspeichers 28, einer mit dem Eingang des Verteilerelements 35 und einer über eine Kraftstoff-Rückführleitung 37 mit dem Kraftstoffbehälter 15 verbunden ist. In der Kraftstoff-Rückführleitung 37 ist noch ein Rückschlagventil 38 angeordnet, das in dem 3/2-Wegeventil 36 integriert sein kann.

Bei dieser Voreinspritzeinheit 227 ist nur noch ein einziges Magnetventil 30 erforderlich, da die synchrone Ansteuerung der vier Voreinspritzdüsen 132 durch das zwangsgesteuerte Verteilerelement 35, das von dem Dieselmotor angetrieben wird, erfolgt.

Die Voreinspritzeinheiten in Fig. 3 bis Fig. 5 erfordern eine abgewandelte Bauart der Voreinspritzdüsen 132. Hier sind zumindest die der Vorspritzeinheit zugeordneten Düsennadeln 20 so ausgebildet, daß sie mit ihrer von der Spritzöffnung 22 abgekehrten Stirnfläche 39 einen Steuerraum 40 im Düsenhalter 16 (in Fig. 3—5 nicht dargestellt) begrenzen. Der Steuerraum 40 ist mit Kraftstoff aus dem Hochdruckspeicher 28 füllbar und mittels des Magnetventils 30 wahlweise absperr- oder freigebbar. Für jede Einspritzdüse 13 ist wiederum ein gesondertes Magnetventil 30 erforderlich, so daß bei einem vierzylindrigen Dieselmotor insgesamt vier Magnetventile 30 vorhanden sind. Die Magnetventile 30 werden wiederum von der Steuereinheit 31 getriggert. Bei allen Voreinspritzeinheiten 327—527 ist jede Einspritzkammer 18 der Voreinspritzdüse 132 über die Verbindungsleitung 34 unmittelbar mit dem Hochdruckspeicher 28 verbunden.

Bei der in Fig. 3 schematisch skizzierten Voreinspritzeinheit 327 ist der Steuerraum 40 einerseits über eine Drossel 41 mit dem Hochdruckspeicher 28 und andererseits mit der zu dem Kraftstoffbehälter 15 führenden Kraftstoffrückführleitung 26 verbunden. In die Kraftstoffrückführleitung 26 ist das wiederum als 2/2-Wegeventil 32 mit Federrückstellung ausgebildete Magnetventil 30 eingeschaltet, das in seinem stromlosen Zustand sperrt, also die Kraftstoffrückführleitung 26 unterbricht, und den Steuerraum 40 abschließt. In der Kraftstoffrückführleitung 26 zwischen Steuerraum 40 und Magnetventil 30 ist noch ein Rückschlagventil 42 vorgesehen.

Bei dieser Voreinspritzeinheit 327 wirkt der Druck im Hochdruckspeicher 28 auf die Einspritzkammer 18 und über die Drossel 41 auf den Steuerraum 40 und damit auf die Rückseite der Düsennadel 20. Wird das Magnetventil 30 erregt und steuert in seinen geöffneten Zustand, so wird der Druck im Federraum 40 über die Kraftstoffrückführleitung 26 abgesteuert. Damit öffnet die Düsennadel 20 und gibt die Spritzöffnung 22 frei. Das Einspritzende wird durch erneutes Schalten des Magnetventils 30 eingeleitet.

Bei der Voreinspritzeinheit 427 in Fig. 4 ist der Steuerraum 40 einerseits über das Magnetventil 30 mit dem Hochdruckspeicher 28 und andererseits über die Kraftstoffrückführleitung 26 mit dem Kraftstoffbehälter 15 verbunden. In der Kraftstoffrückführleitung 26 ist eine Drossel 41 angeordnet. Das Magnetventil 30 ist wiederum als 2/2-Wegeventil 33 mit Federrückstellung ausgebildet, das in seiner stromlosen Ruhestellung geöffnet ist und den Hochdruckspeicher 28 mit dem Steuerraum 40 verbindet.

Durch Betätigung des Magnetventils 30 wird die Verbindung zwischen Hochdruckspeicher 28 und Steuerraum 40 der Voreinspritzdüse 132 unterbrochen. Der Druck im Steuerraum 40 wird über die Drossel 41 abgesteuert, so daß die Düsennadeln 20 unter dem Druck der Einspritzkammer 18 öffnet und die Spritzöffnung 22 freigibt. Das Spritzende wird durch Umschalten des Magnetventils 30 in seine Ruhestellung eingeleitet, in welcher der Steuerraum 40 wiederum mit unter Einspritzdruck stehendem Kraftstoff gefüllt wird.

Bei der Voreinspritzeinheit 527 in Fig. 5 ist der Steuerraum 40 über das als 3/2-Wegeventil 36 mit Federrückstellung ausgebildete Magnetventil 30 wechselweise mit dem Hochdruckspeicher 28 und mit der zu dem Kraftstoffbehälter 15 führenden Kraftstoffrückführleitung 26 verbindbar. Von den drei gesteuerten Anschlüssen des 3/2-Wegeventils 36 ist der eine mit dem Ausgang des Hochdruckspeichers 28, der andere mit dem Eingang des Steuerraums 40 und der dritte mit der Kraftstoffrückführleitung 26 verbunden. In der Kraftstoffrückführleitung 26 ist noch eine Drossel 41 eingeschaltet, die vorzugsweise in dem 3/2-Wegeventil 36 integriert ist. In stromlosem Zustand verbindet das Magnetventil 30 den Steuerraum 40 mit dem Hochdruckspeicher 28. Durch den Einspritzdruck im Steuerraum 40 verschließt die Düsennadel 20 die Spritzöffnung 22. Mit Ansteuerung des Magnetventils 30 wird der Steuerraum 40 mit der Kraftstoffrückführleitung 26 verbunden und der Hochdruckspeicher 28 abgesperrt. Der Druck im Steuerraum 40 wird abgesteuert und die Düsennadel 20 gibt die Spritzöffnung 22 frei. Die Voreinspritzeinheit 527 arbeitet in gleicher Weise wie die Voreinspritzeinheit 427 in Fig. 4, vermeidet jedoch die Instabilität der Vorspritzeinheit 427 wegen des dort über die Drossel 41 ständig vorhandenen Druckabfalls.

**Patentansprüche**

1. Kraftstoffeinspritzvorrichtung für Brennkraftmaschinen, insbesondere für Dieselmotoren, mit mindestens einer jeweils einem Zylinder der Brennkraftmaschine zugeordneten Einspritzdüse (13) zum Einspritzen einer jeweils zugemessenen, in Vor- und Haupteinspritzmenge aufgeteilten Kraftstoffmenge, mit einer Voreinspritzeinheit (27) zur Zumessung der Voreinspritzmenge und mit einer Kraftstoffeinspritzpumpe (10) zur Zumessung der Haupteinspritzmenge, dadurch gekennzeichnet, daß die Voreinspritzeinheit (27; 227; 327; 427; 527) einen auf Einspritzdruck gespannten, kraftstoffgefüllten Hochdruckspeicher (28) und mindestens ein als Schaltventil ausgebildetes Magnetventil (30) aufweist, das eine mit dem Hochdruckspeicher (28) und der Einspritzdüse (13) in Verbindung stehende Leitung steuert und dessen Verharren in einer seiner Schaltstellungen sowie dessen Schaltzeitpunkte zeitgesteuert sind.

2. Vorrichtung nach Anspruch 1, dadurch gekennzeichnet, daß die Einspritzdüse (13) zwei Einspritzquerschnitte (1, 22) aufweist, von denen der kleinere der Voreinspritzeinheit (27; 227; 327; 427; 527) und der größere der Kraftstoffeinspritzpumpe (10) zugeordnet ist.

3. Vorrichtung nach Anspruch 2, dadurch gekennzeichnet, daß die Einspritzdüse (13) einen Düsenhalter (16) mit zwei Einspritzkammern (17, 18) aufweist, von denen jeweils eine mit dem Hochdruckspeicher (28) und eine mit der Kraftstoffeinspritzpumpe (10) verbunden ist, daß die Einspritzquerschnitte von Spritzöffnungen (21, 22) der Einspritzkammern (17, 18) gebildet sind, die von jeweils einer Düsennadel (19, 20) gesteuert sind, und daß die Düsennadeln (19, 20) vom Einspritzdruck in den Einspritzkammern (17, 18) in Spritzöffnungsrichtung beaufschlagt sind.

4. Vorrichtung nach Anspruch 3, dadurch gekennzeichnet, daß die Düsennadeln (19, 20) jeweils mittels einer Schließfeder (23) in Spritzschließrichtung belastet sind und daß das Magnetventil (30) in der Verbindungsleitung (34) zwischen dem Hochdruckspeicher (28) und der der Vorspritzeinheit (27, 227) zugeordneten Einspritzkammer (18) angeordnet ist.

5. Vorrichtung nach Anspruch 4, dadurch gekennzeichnet, daß bei einer Mehrzahl von Einspritzdüsen (13) in jeder von dem Hochdruckspeicher (28) zu den Einspritzkammern (18) führenden Verbindungsleitung (34) ein Magnetventil (30) eingeschaltet ist, und daß die Magnetventile (30) als 2/2-Wegeventile (33) ausgebildet sind, die vorzugsweise in der stromlosen Ruhestellung sperren (Fig. 1).

6. Vorrichtung nach Anspruch 4, dadurch gekennzeichnet, daß bei einer Mehrzahl von Einspritzdüsen (13) ein zwangsgesteuertes Verteilerelement (35) vorgesehen ist, das eingangsseitig mit dem Hochdruckspeicher (28) und ausgangsseitig mit jeder der der Voreinspritzeinheit (227) zugeordneten Einspritzkammern (18) in Verbindung steht, und daß das Magnetventil (30) zwischen Hochdruckspeicher (28) und Verteilerelement (35) angeordnet und als 3/2-Wegeventil (36) ausgebildet ist, dessen dritter gesteuerter Anschluß mit einer Kraftstoff-Rücklaufleitung (37) in Verbindung steht (Fig. 2).

7. Vorrichtung nach Anspruch 3, dadurch gekennzeichnet, daß zumindest die der Voreinspritzeinheit (327; 427; 527) zugeordnete Düsennadel (20) mit ihrer von der Spritzöffnung (22) abgekehrten Stirnfläche (39) einen vom Hochdruckspeicher (28) füllbaren Steuerraum (40) begrenzt, der mittels des Magnetventils (30) absperroder freigebbar ist (Fig. 3—5).

8. Vorrichtung nach Anspruch 7, dadurch gekennzeichnet, daß der Steuerraum (40) einerseits über eine Drossel (41) mit dem Hochdruckspeicher (28) und andererseits über das Magnetventil (30) mit einer Kraftstoffrückführleitung (26) verbunden ist und daß das Magnetventil (30) als 2/2-Wegeventil (33) ausgebildet ist, das vorzugsweise in seiner stromlosen Ruhestellung sperrt (Fig. 3).

9. Vorrichtung nach Anspruch 7, dadurch gekennzeichnet, daß der Steuerraum (40) einerseits über eine Drossel (41) mit einer Kraftstoffrückführleitung (26) und andererseits über das Magnetventil (30) mit dem Hochdruckspeicher (28) verbunden ist und daß das Magnetventil (30) als 2/2-Wegeventil (33) ausgebildet ist, das vorzugsweise in seiner stromlosen Ruhestellung offen ist (Fig. 4).

10. Vorrichtung nach Anspruch 7, dadurch gekennzeichnet, daß der Steuerraum (40) über das Magnetventil (30) wechselweise mit dem Hochdruckspeicher (28) und mit einer Kraftstoffrückführleitung (26) verbunden ist und daß das Magnetventil (30) als 3/2-Wegeventil (36) ausgebildet ist, von dessen drei gesteuerten Anschlüssen einer mit dem Steuerraum (40), einer mit dem Hochdruckspeicher (28) und einer über eine Drossel (41) mit der Kraftstoffrückführleitung (26) verbunden ist (Fig. 5).

11. Vorrichtung nach einem der Ansprüche 7—10, dadurch gekennzeichnet, daß bei einer Mehrzahl von Einspritzdüsen (13) jedem Steuerraum (40) ein separates Magnetventil (30) zugeordnet ist.

12. Vorrichtung nach einem der Ansprüche 1—11, dadurch gekennzeichnet, daß die Voreinspritzeinheit (27; 227; 327; 427; 527) eine mit einem Kraftstoffbehälter (15) verbundene Kraftstofförderpumpe (29) zur Speicherdruckversorgung des Hochdruckspeichers (28) aufweist.

**Revendications**

1. Dispositif d'injection de carburant pour moteurs à combustion interne, notamment pour des moteurs diesel, avec au moins une buse d'injection (13) associée à respectivement un cylindre du moteur à combustion interne pour l'injection d'une quantité de carburant respectivement dosée, et répartie en une quantité de pré-injection et une quantité d'injection principale, avec une unité de pré-injection (27) pour doser la quantité de pré-injection et avec une pompe d'injection de carburant (10) pour doser la quantité d'injection principale, dispositif caractérisé en ce que l'unité de pré-injection (27; 227; 327; 427; 527) comporte un accumulateur haute pression (28) chargé à la pression d'injection et rempli de carburant, ainsi qu'au moins une soupape distributeur électromagnétique (30) réalisée sous la forme d'une soupape de commutation, qui commande une canalisation se trouvant en communication avec l'accumulateur haute pression (28) et la buse d'injection (13) et dont le maintien dans l'une de ces positions de commutation, ainsi que ses instants de commutation, sont commandés en fonction du temps.

2. Dispositif selon la revendication 1, caractérisé en ce que la buse d'injection (13) comporte deux sections transversales d'injection (21, 22) dont la plus petite est associée à l'unité de pré-injection (27; 227; 327; 427; 527) tandis que la plus grande est associée à la pompe d'injection de carburant (10).

3. Dispositif selon la revendication 2, caractérisé en ce que la buse d'injection (13) comporte un support de buse (16) avec deux chambres d'injection (17, 18), dont l'une est respectivement reliée à l'accumulateur haute pression (28), tandis que l'autre est reliée à la pompe d'injection de carburant (10), les sections transversales d'injection étant constituées par des orifices d'injection (21, 22) des chambres d'injection (17, 18) qui sont respectivement commandées par un pointeau de buse (19, 20), et les pointeaux de buses (19, 20) étant sollicités dans le sens de l'orifice d'injection par la pression d'injection dans les chambres d'injection (17, 18).

4. Dispositif selon la revendication 3, caractérisé en ce que les pointeaux de buses (19, 20) sont respectivement sollicités par un ressort de fermeture (23) dans le sens de la fermeture de l'injection, tandis que la soupape distributeur électromagnétique (30) est disposée sur la canalisation de liaison (34) entre l'accumulateur haute pression (28) et la chambre d'injection (18) associée à l'unité de pré-injection (27, 227).

5. Dispositif selon la revendication 4, caractérisé en ce que, dans le cas d'une pluralité de buses d'injection (13), une soupape distributeur électromagnétique (30) est branchée sur chaque canalisation de liaison (34) allant de l'accumulateur haute pression (28) vers les chambres d'injection (18), tandis que les soupapes distributeurs électromagnétiques (30) revêtent la forme de distributeurs 2/2 (33), qui se ferment, de préférence, à l'état de repos en l'absence de courant (figure 1).

6. Dispositif selon la revendication 4, caractérisé en ce que, dans le cas d'une pluralité de buses d'injection (13), il est prévu un élément répartiteur (35) commandé de façon impérative, qui est en communication, côté entrée, avec l'accumulateur haute pression (28) et côté sortie avec chacune des chambres d'injection (18) associées aux unités de pré-injection (227), et la soupape distributeur électromagnétique (30) est disposée entre l'accumulateur haute pression (28) et l'élément répartiteur (35) et elle revêt la forme d'un distributeur 3/2 (36), dont le troisième raccordement commandé est en communication avec une canalisation de retour de carburant (37) (figure 2).

7. Dispositif selon la revendication 3, caractérisé en ce que, tout au moins le pointeau de buse (20) associé à l'unité de pré-injection (327; 427; 527), délimite par sa surface frontale (39) opposée à l'orifice d'injection (22), une chambre de commande (40) susceptible d'être remplie par l'accumulateur haute pression (28), cette chambre étant susceptible d'être obstruée ou bien libérée par la soupape distributeur électromagnétique (30) (figures 3 à 5).

8. Dispositif selon la revendication 7, caractérisé en ce que la chambre de commande (40) est reliée d'un côté par l'intermédiaire d'un étranglement (41) à l'accumulateur haute pression (28) et de l'autre côté, par l'intermédiaire de la soupape distributeur électromagnétique (30) à une canalisation de retour de carburant (26), et que la soupape distributeur électromagnétique (30) revêt la forme d'un distributeur 2/2 (33) qui est fermé, de préférence, dans sa position de repos en l'absence de courant (figure 3).

9. Dispositif selon la revendication 7, caractérisé en ce que la chambre de commande (40) est reliée, d'un côté, par l'intermédiaire d'un étranglement (41) à une canalisation de retour de carburant (26) et de l'autre côté, par l'intermédiaire de la soupape distributeur électromagnétique (30) à l'accumulateur haute pression (28), et que la soupape distributeur électromagnétique (30) revêt la forme d'un distributeur 2/2 (33) qui est de préférence ouvert dans sa position de repos en l'absence de courant (4).

10. Dispositif selon la revendication 7, caractérisé en ce que la chambre de commande (40) est reliée par l'intermédiaire de la soupape distributeur électromagnétique (30) alternativement à l'accumulateur haute pression (28) et à une canalisation de retour de carburant (26), et que la soupape distributeur électromagnétique (30) revêt la forme d'un distributeur 3/2 (36) dont chacun des trois raccordements commandés est respectivement relié à la chambre de commande (40), à l'accumulateur haute pression (28) et par l'intermédiaire d'un étranglement (41) à la canalisation de retour de carburant (26) (figure 5).

11. Dispositif selon une des revendications 7 à 10, caractérisé en ce que dans le cas d'une pluralité de buses d'injection (13), une soupape distributeur électromagnétique distincte (30) est associée à chaque chambre de commande (40).

12. Dispositif selon une des revendications 1 àll, caractérisé en ce que l'unité de pré-injection (27, 227, 327, 427, 527) prévoit une pompe de refoulement de carburant (29) reliée au réservoir de carburant (15) par rapport à l'alimentation en haute pression de l'accumulateur haute pression (28).

**Claims**

1. Fuel injection device for internal combustion engines, in particular for diesel engines, having at least one injection nozzle (13), assigned to in each case one cylinder of the internal combustion engine, for injecting a fuel quantity which is in each case dosed and divided up into pre-injection quantity and main injection quantity, having a pre-injection unit (27) for dosing the pre-injection quantity and having a fuel injection pump (10) for dosing the main injection quantity, characterized in that the pre-injection unit (27; 227; 327; 427; 527) has a high-pressure accumulator (28), which is charged to injection pressure and filled with fuel, at least one solenoid valve (30) constructed as on-off valve which controls a line which connects to the high-pressure accumulator (28) and the injection nozzle (30) and whose continuation in one of its switching positions as well as whose switching times are timed.

2. Device according to Claim 1, characterized in that the injection nozzle (13) has two injection cross-sections (21, 22) of which the smaller is assigned to the pre-injection unit (27; 227; 327; 427; 527) and the larger to the fuel injection pump (10).

3. Device according to Claim 2, characterized in that the injection nozzle (13) has a nozzle holder (16) with two injection chambers (17, 18) of which in each case one is connected to the high-pressure accumulator (28) and one to the fuel injection pump (10), in that the injection cross-sections are formed by injection orifices (21, 22) of the injection chambers (17, 18) which are controlled by one nozzle needle (19, 20) in each case, and in that the nozzle needles (19, 20) are loaded by the injection pressure in the injection chambers (17, 18) in the injection opening direction.

4. Device according to Claim 3, characterized in that the nozzle needles (19, 20) are loaded in each case by means of one closing spring (23) in the injection closing direction, and in that the solenoid valve (30) is arranged in the connecting line (34) between the high-pressure accumulator (28) and the injection chamber (18) assigned to the pre-injection unit (27, 227).

5. Device according to Claim 4, characterized in that, in the case of a multiplicity of injection nozzles (13), a solenoid valve (30) is connected in each connecting line (34) leading from the high-pressure accumulator (28) to the injection chambers (18), and in that the solenoid valves (30) are constructed as 2/2 way valves (33) which preferably block in the currentless quiescent position (Fig. 1).

6. Device according to claim 4, characterized in that, in the case of a multiplicity of injection nozzles (13), a positive-controlled distributor element (35) is provided which connects on the input side to the high-pressure accumulator (28) and on the output side to each of the injection chambers (18) assigned to the pre-injection unit (227), and in that the solenoid valve (30) is arranged between high-pressure accumulator (28) and distributor element (35) and is constructed as 3/2 way valve (36), a third controlled connection of which connects with a fuel return line (37) (Fig. 2).

7. Device according to Claim 3, characterized in that at least the nozzle needle (20), assigned to the pre-injection unit (327; 427; 527), defines, with its end face (39) facing away from the injection orifice (22), a control space (40) which can be filled from the high-pressure accumulator (28), it being possible to block or release said control space by means of the solenoid valve (30) (Fig. 3—5).

8. Device according to Claim 7, characterized in that the control space (40) is connected firstly via a choke (41) to the high-pressure accumulator (28) and secondly via the solenoid valve (30) to a fuel return line (26), and in that the solenoid valve (30) is constructed as 2/2 way valve (33) which preferably blocks in its currentless quiescent position (Fig. 3).

9. Device according to Claim 7, characterized in that the control space (40) is connected firstly via a choke (41) to a fuel return line (26) and secondly via the solenoid valve (30) to the high-pressure accumulator (28), and in that the solenoid valve (30) is constructed as 2/2 way valve (33) which is preferably open in its currentless quiescent position (Fig. 4).

10. Device according to Claim 7, characterized in that the control space (40) is connected via the solenoid valve (30) alternately to the high-pressure accumulator (28) and to a fuel return line (26), and in that the solenoid valve (30) is constructed as 3/2 way valve (36) of whose three controlled connections one is connected to the control space (40), one to the high-pressure accumulator (28) and one via a choke (41) to the fuel return line (26) (Fig. 5).

11. Device according to one of Claims 7—10, characterized in that, in the case of a multiplicity of injection nozzles (13), a separate solenoid valve (30) is assigned to each control space (40).

12. Device according to one of Claims 1—11, characterized in that the pre-injection unit (27; 227; 327; 427; 527) has a fuel delivery pump (29), connected to a fuel container (15), for supplying the accumulator pressure of the high-pressure accumulator (28).

Fig.1

EP 0 287 580 B1

Fig.2

Fig.3

Fig.4

Fig.5

2